# EUROPÄISCHE PATENTSCHRIFT

(11) **EP 3 729 012 B1**
(45) Veröffentlichungstag und Bekanntmachung des Hinweises auf die Patenterteilung: **08.11.2023**
(21) Anmeldenummer: 18804579.3
(22) Anmeldetag: 15.11.2018
(51) Int. Cl.: G01F 1/88, G01F 1/50, G01F 1/36, G01F 5/00, G01N 9/00, G01N 11/16

(54) **VERFAHREN ZUM BESTIMMEN EINES VOLUMEN- UND/ODER MASSENDURCHFLUSSES**
METHOD FOR DETERMINING A VOLUMETRIC AND/OR MASS FLOW RATE
PROCÉDÉ SERVANT À DÉFINIR UN DÉBIT VOLUMIQUE ET/OU MASSIQUE

(30) Priorität: 20.12.2017 DE 102017130781
(43) Veröffentlichungstag der Anmeldung: 28.10.2020
(73) Patentinhaber: TrueDyne Sensors AG, 4153 Reinach (CH)
(72) Erfinder: HUBER, Christof, 3007 Bern (CH); REITH, Patrick, D-79535 Bahlingen (DE)
(74) Vertreter: Hahn, Christian
(86) Internationale Anmeldenummer: PCT/EP2018/081426
(87) Internationale Veröffentlichungsnummer: WO 2019/120791

(56) Entgegenhaltungen:
- EP-A1- 0 874 976
- DE-A1-102014 119 212
- DE-A1-102015 110 711
- DE-A1-102015 118 346
- KALOTAY P ED - PIEPER JEFF: "Density and viscosity monitoring systems using Coriolis flow meters", ISA TRANSACTI, INSTRUMENT SOCIETY OF AMERICA. PITTSBURGH, US, Bd. 38, Nr. 4, 25. November 1999 (1999-11-25), Seiten 303-310, XP004244796, ISSN: 0019-0578, DOI: 10.1016/S0019-0578(99)00023-3

## Beschreibung

Die Erfindung bezieht sich auf ein Verfahren zum Bestimmen eines Volumen- und/oder Massendurchflusses von einem in einem Rohr strömenden Medium, sowie eine Vorrichtung zur Bestimmung eines Volumen- und/oder Massendurchflusses von einem in einem Rohr strömenden Medium.

Vorrichtungen zum Bestimmen eines Volumendurchflusses nach dem Differenzdruckprinzip sind an sich bekannt. Hierbei werden bspw. Blenden als Wirkdruckgeber eingesetzt und eine Druckdifferenz über der Blende erfasst. Zur Messung selbst ist ein Differenzdruckmessgerät sowie die Kenntnis der Stoffwerte, insbesondere Viskosität, Dichte und Isentropenexponent, erforderlich. Einzelheiten hierfür sind in der Norm ISO 5167-1 aus dem Jahr 2004 und 2:2003 aus dem Jahr 2003 definiert.

Nachteilig hieran ist, dass die Messung des Volumendurchflusses von den Stoffwerten des Mediums abhängig (medienabhängig) ist, die somit bekannt sein müssen.

DE 10 2014 119 212 A1, DE 2015 118 346 A1 und DE10 2015 110 711 A1 offenbaren MEMS-Vorrichtungen und Verfahren zur genauen Viskositätsbestimmung eines Mediums bei bekanntem Durchfluss. DE 10 2015 110 711 A1 offenbart weiterhin, dass bei bekannter Viskosität auch ein Durchfluss durch Abschnitte des MEMS-Sensors bestimmte werden kann.

Es ist daher Aufgabe der vorliegenden Erfindung, hier Abhilfe zu leisten.

Die Aufgabe wird erfindungsgemäß gelöst durch das Verfahren gemäß Patentanspruch 1, sowie der Vorrichtung gemäß Patentanspruch 3.

Das erfindungsgemäße Verfahren sieht zum Bestimmen eines Volumen- und/oder Massendurchflusses von einem in einem Rohr strömenden Medium vor, dass mittels eines MEMS Sensorchips eine Dichte und/oder eine Viskosität des Fluids ermittelt wird bzw. werden, wobei ein Messkanal des MEMS Sensorchips zum Ermitteln der Dichte und/oder der Viskosität des Fluids zumindest teilweise von dem in dem Rohr strömenden Medium durchströmt wird, und wobei mittels eines erfassten Druckabfalls | p2-p1 | über dem Messkanal des MEMS Sensorchips und der durch den MEMS Sensor ermittelten Dichte und/oder Viskosität der Volumen- und/oder Massendurchfluss des Mediums medienunabhängig bestimmt wird,
wobei eine Blende derartig in das Rohr eingebracht ist, dass die Blende und der Messkanal des MEMS Sensorchips parallel durchströmt werden und der Druckabfall | p2-p1 | durch die in das Rohr eingebrachte Blende und den teilweise durchströmten Messkanal des MEMS Sensorchips erzeugt wird.

Erfindungsgemäß ist vorgesehen, dass die Blende und der Messkanal derartig aufeinander abgestimmt sind, dass sich ein Strömungsverhältnis von dem durch den Messkanal strömenden Medium zu dem durch die Blende strömenden Medium von kleiner 1:20, bevorzugt 1:100, besonders bevorzugt kleiner 1:500 einstellt.

MEMS-Sensorchips sind Mikro-Elektromechanische Systeme, die in der Messtechnik zur messtechnischen Erfassung einer oder mehrerer Messgrößen eingesetzt werden. Diese MEMS-Sensorchips werden regelmäßig unter Verwendung von in der Halbleitertechnologie üblichen Verfahren, wie z.B. Ätzprozessen, Oxidationsverfahren, Implantationsverfahren, Bondverfahren und/oder Beschichtungsverfahren, unter Verwendung von ein oder mehrlagigen Wafern, insb. Wafern auf Siliziumbasis, hergestellt. MEMS-Sensorchips, die dazu eingesetzt werden, eine Messgröße eines strömenden Mediums, insb. einer Flüssigkeit oder eines Gases, zu bestimmen, weisen für gewöhnlich mindestens einen Messkanal auf, dessen Innenraum eine Leitung bildet, die im Messbetrieb von dem Medium durchströmt wird.

Erfindungsgemäß wird nun vorgeschlagen, dass parallel zu der herkömmlichen Volumendurchflussmessung nach dem Differenzdruckprinzip ein MEMS Sensorchip die aktuelle Dichte und/oder Viskosität des Mediums bestimmt wird, so dass eine medienunabhängige Volumen- und/oder Massendurchflussmessung ermöglicht wird.

Die erfindungsgemäße Vorrichtung zur Bestimmung eines Volumen- und/oder Massendurchflusses von einem in einem Rohr strömenden Medium umfasst zumindest:
- einen MEMS Sensorchip mit einem Messkanal, der zur Ermittlung einer Dichte und/oder einer Viskosität des Mediums derartig an das Rohr angebunden ist, dass das Medium den Messkanal zumindest teilweise durchströmt,
- eine Blende, durch die das Medium strömt,
   wobei die Blende derartig in das Rohr eingebracht ist, dass das Medium sowohl die Blende als auch den Messkanal parallel durchströmt,
   wobei die Blende eine Blendenöffnung mit einem Strömungsquerschnitt A_{Blende} aufweist, wobei der Strömungsquerschnitt A_{Blende} der Blendenöffnung derartig ausgebildet ist, dass sich ein Strömungsverhältnis von dem durch den Strömungsquerschnitt A_{Messkanal} des Messkanals strömenden Medium zu dem durch den Strömungsquerschnitt A_{Blende} der Blendenöffnung A_{Blende} strömenden Medium von kleiner 1:20, bevorzugt 1:100, besonders bevorzugt kleiner 1:500 einstellt,
- eine Differenzdruckmessanordnung zum Erfassen eines Druckabfalls | p2-p1 | über der in das Rohr eingebrachten Blende und dem Messkanal des MEMS Sensorchips,
wobei eine Auswerteeinheit dazu eingerichtet ist, anhand des durch die Differenzdruckmessanordnung ermittelten Druckabfalls | p2-p1 | und der durch den MEMS Sensorchip ermittelten Dichte und/oder Viskosität den Volumen- und/ oder Massendurchfluss des Mediums medienunabhängig zu bestimmen.

Eine Weiterbildung der Erfindung sieht vor, dass der Messkanal des MEMS Sensorchips einen Strömungsquerschnitt A_{Messkanal} mit einem Durchmesser im Bereich von 0,03 - 1 mm, bevorzugt 0,05 - 0,6 mm, besonders bevorzugt 0,1 - 0,3 mm aufweist.

Die Erfindung wird anhand der nachfolgenden Zeichnungen näher erläutert.

Es zeigt:

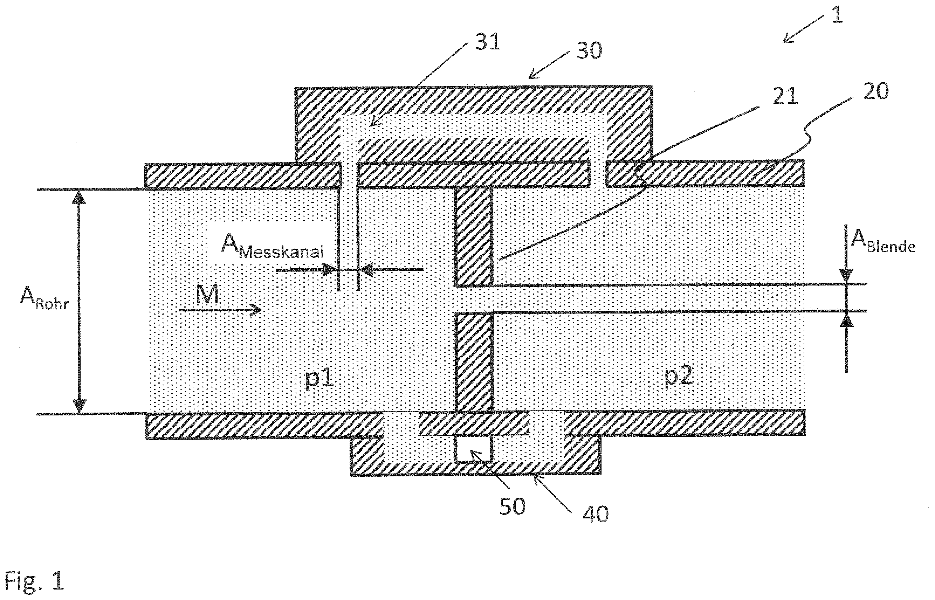

Fig. 1: ein Ausführungsbeispiel der Erfindung.

Figur 1 zeigt ein Ausführungsbeispiel der Erfindung. Hierbei umfasst die Vorrichtung zum Bestimmen eines Volumen- und/oder Massendurchflusses 1 eine nach dem Wirkdruckgeberprinzip aufgebaute Differenzdruckmessanordnung 40 zum Bestimmen eines Volumendurchflusses, welche eine Blende 21 in einem von einem Medium M zu durchströmenden Rohr 20 aufweist. Das Rohr 20 weist typischerweise einen Strömungsquerschnitt A_{Rohr} mit einem Durchmesser im Bereich von <30 mm, bevorzugt <10 mm, besonders bevorzugt <5 mm auf. In dem Rohr 20 ist die Blende 21 in Strömungsrichtung als Wirkdruckgeber eingebracht. Die Blende 21 weist eine Blendenöffnung mit einem Öffnungs- bzw. Strömungsquerschnitt A_{Blende} mit einem Durchmesser von typischerweise 0,2 - 10 mm, bevorzugt 0,4 - 5 mm, besonders bevorzugt 0,7 - 2 mm auf. Zusätzlich zu dem Strömungspfad des Mediums M durch die Blende 21, ist, in einem dazu parallelen Strömungspfad, ein MEMS Sensorchip 30 zur Bestimmung der Dichte und/oder Viskosität des Mediums M an das Rohr 20 angebunden. Der MEMS Sensorchip 30 weist einen Messkanal 31 auf, durch den das Medium M im Messbetrieb strömt, so dass die Dichte und/oder Viskosität des Mediums M durch den MEMS Sensorchip 30 bestimmt werden kann. Der Messkanal 31 weist typischerweise einen Strömungsquerschnitt A_{Messkanal} mit einem Durchmesser im Bereich von 0,03 - 1 mm, bevorzugt 0,05 - 0,6 mm, besonders bevorzugt 0,1 - 0,3 mm auf.

Prinzipiell arbeitet der MEMS Sensorchip 30 mit einer schwingfähigen Einheit deren Schwingungsverhalten zur Bestimmung der Dichte und/der Viskosität erfasst wird. Hierbei kann bspw. die Viskosität des Mediums M über eine Güte der Schwingung der schwingfähigen Einheit bestimmt werden. Je nach Medium M kann die schwingfähige Einheit des MEMS Sensorchips 30 dabei unterschiedlich ausgebildet sein. In dem Fall, dass das Medium M ein Gas umfasst, kann die schwingfähige Einheit bspw. in Form eines Cantilevers oder eines Schwingquarzes ausgebildet sein, wohingegen in dem Fall, dass das Medium M eine Flüssigkeit umfasst, die schwingfähige Einheit bspw. in Form eines zur Schwingung angeregten Messkanals 31 ausgebildet sein kann. In beiden Fällen wird sich zu Nutze gemacht, dass sich zumindest eine Eigenschaft der Schwingung der schwingfähigen Einheit aufgrund einer Dichte und/oder Viskosität des Mediums M ändert, so dass die Dichte und/oder Viskosität bestimmbar ist.

Die Vorrichtung zum Bestimmen eines Volumen- und/oder Massendurchflusses 1 umfasst ferner eine Auswerteeinheit 50, die dazu eingerichtet ist, anhand des durch die Differenzdruckmessanordnung 40 ermittelten Druckabfalls | p2-p1 | und der durch den MEMS Sensorchip 30 ermittelten Dichte und/oder Viskosität den Volumen- und/oder Massendurchfluss des Mediums M medienunabhängig zu bestimmen. Hierfür kann die Auswerteeinheit 50 anhand des ermittelten Druckabfalls | p2-p1 | und der Viskosität gemäß dem Gesetz von Hagen-Poiseuille den Volumendurchfluss durch das Rohr ermitteln. Ferner kann die Auswerteeinheit 50 anhand der ermittelten Dichte auch den Massendurchfluss durch das Rohr 20 ermitteln.

### Bezugszeichenliste

- 1: Vorrichtung zum Bestimmen eines Volumen- und/oder Massendurchflusses
- 20: Rohr
- 21: Blende
- 30: MEMS Sensorchip zum Bestimmen der Dichte und/oder Viskosität
- 31: Messkanal des MEMS Sensors
- 40: Vorrichtung zum Bestimmen eines Druckabfalls
- 50: Auswerteeinheit
- A_{Blende}: Strömungsquerschnitt Blendenöffnung
- A_{Messkanal}: Strömungsquerschnitt Messkanals
- A_{Rohr}: Strömungsquerschnitt Rohr
- | p2-p1 |: Betrag des Druckabfalls
- M: Medium

## Patentansprüche

1. Verfahren zum Bestimmen eines Volumen- und/oder Massendurchflusses von einem in einem Rohr (20) strömenden Medium (M), wobei mittels eines MEMS Sensorchips (30) eine Dichte und/oder eine Viskosität des Fluids (F) ermittelt wird bzw. werden, wobei ein Messkanal (31) des MEMS Sensorchips (30) zum Ermitteln der Dichte und/oder der Viskosität des Fluids (F) zumindest teilweise von dem in dem Rohr (20) strömenden Medium (M) durchströmt wird,
wobei eine Blende (21) derartig in das Rohr (20) eingebracht ist, dass die Blende und der Messkanal des MEMS Sensorchips parallel durchströmt werden und ein Druckabfall (| p2-p1 | ) durch die in das Rohr (20) eingebrachte Blende (21) und den teilweise durchströmten Messkanal (31) des MEMS Sensorchips (30) erzeugt wird,
wobei die Blende (21) und der Messkanal (31) derartig aufeinander abgestimmt sind, dass sich ein Strömungsverhältnis von dem durch den Messkanal (31) strömenden Medium (M) zu dem durch die Blende (21) strömenden Medium (M) von kleiner 1:20 einstellt,
wobei der Druckabfall erfasst wird,
**dadurch gekennzeichnet, dass**
mittels des erfassten Druckabfalls (| p2-p1 |) und der durch den MEMS Sensorchip (30) ermittelten Dichte und/oder Viskosität der Volumen- und/oder Massendurchfluss des Mediums (M) medienunabhängig bestimmt wird.

2. Verfahren nach Anspruch 1, wobei die Blende (21) und der Messkanal (31) derartig aufeinander abgestimmt sind, dass sich ein Strömungsverhältnis von dem durch den Messkanal (31) strömenden Medium (M) zu dem durch die Blende (21) strömenden Medium (M) von kleiner 1:100, besonders bevorzugt kleiner 1:500 einstellt.

3. Vorrichtung zur Bestimmung eines Volumen- und/oder Massendurchflusses (1) von einem in einem Rohr (20) strömenden Medium (M), aufweisend zumindest:
einen MEMS Sensorchip (30) mit einem Messkanal (31), der zur Ermittlung einer Dichte und/oder einer Viskosität des Mediums (M) derartig an das Rohr (20) angebunden ist, dass das Medium (M) den Messkanal (31) zumindest teilweise durchströmt,
eine Blende (21) durch die das Medium (M) strömt, wobei die Blende (21) derartig in das Rohr (20) eingebracht ist, dass das Medium (M) sowohl die Blende (21) als auch den Messkanal (31) parallel durchströmt,
wobei die Blende (21) eine Blendenöffnung mit einem Strömungsquerschnitt (A_{Blende}) aufweist, wobei der Strömungsquerschnitt (A_{Blende}) der Blendenöffnung derartig ausgebildet ist, dass sich ein Strömungsverhältnis von dem durch den Strömungsquerschnitt (A_{Messkanal}) des Messkanals (31) strömenden Medium (M) zu dem durch den Strömungsquerschnitt (A_{Blende}) der Blendenöffnung (A_{Blende}) strömenden Medium (M) von kleiner 1:20 einstellt;
eine Differenzdruckmessanordnung (40) zum Erfassen eines Druckabfalls (| p2-p1 |) über der in das Rohr (20) eingebrachten Blende (21) und dem Messkanal (31) des MEMS Sensorchips (30),
und eine Auswerteeinheit (50)
**dadurch gekennzeichnet, dass**
die Auswerteeinheit (50) dazu eingerichtet ist, anhand des durch die Differenzdruckmessanordnung ermittelten Druckabfalls (| p2-p1 |) und der durch den MEMS Sensorchip (30) ermittelten Dichte und/oder Viskosität den Volumen- und/oder Massendurchfluss des Mediums (M) medienunabhängig zu bestimmen.

4. Vorrichtung nach Anspruch 3, wobei der Strömungsquerschnitt (A_{Blende}) der Blendenöffnung der Blende (21) derartig ausgebildet ist, dass sich ein Strömungsverhältnis von dem durch den Strömungsquerschnitt (A_{Messkanal}) des Messkanals (31) strömenden Medium (M) zu dem durch den Strömungsquerschnitt (A_{Blende}) der Blendenöffnung (A_{Blende}) strömenden Medium (M) von kleiner 1:100, besonders bevorzugt kleiner 1:500 einstellt.

5. Vorrichtung nach einem der Ansprüche 3 oder 4, wobei der Messkanal (31) des MEMS Sensorchips (30) einen Strömungsquerschnitt (A_{Messkanal}) mit einem Durchmesser im Bereich von 0,03 - 1 mm, bevorzugt 0,05 - 0,6 mm, besonders bevorzugt 0,1 - 0,3 mm aufweist.

## Claims

1. A method for determining a volume flow and/or mass flow of a medium (M) flowing in a pipe (20), wherein a density and/or a viscosity of the fluid (F) is/are determined using an MEMS sensor chip (30), wherein the medium (M) flowing in the pipe (20) flows through at least part of a measurement channel (31) of the MEMS sensor chip (30) for determining the density and/or the viscosity of the fluid (F),
wherein an orifice plate (21) is inserted into the pipe (20) in such a way that the flow passes through the orifice plate and the measurement channel of the MEMS sensor chip in parallel and a pressure drop (| p2-p1 |) is generated by the orifice plate (21) inserted into the pipe (20) and the measurement channel (31) of the MEMS sensor chip (30), said pipe having the medium (M) flow through at least part of it,
wherein the orifice plate (21) and the measurement channel (31) are coordinated in such a way that a flow ratio from the medium (M) flowing through the measurement channel (31) to the medium (M) flowing through the orifice plate (21) is set to less than 1:20,
wherein the pressure drop is registered,
**characterized in that**
the volume flow and/or mass flow of the medium (M) is/are determined independently of the medium using the registered pressure drop (| p2-p1 |) and the density and/or viscosity determined by the MEMS sensor chip (30).

2. The method as claimed in claim 1, wherein the orifice plate (21) and the measurement channel (31) are coordinated in such a way that a flow ratio from the medium (M) flowing through the measurement channel (31) to the medium (M) flowing through the orifice plate (21) is set to less than 1:100, particularly preferably less than 1:500.

3. An apparatus for determining a volume flow and/or mass flow (1) of a medium (M) flowing in a pipe (20), comprising at least:
An MEMS sensor chip (30) with a measurement channel (31) which is connected to the pipe (20) for the determining a density and/or a viscosity of the medium (M) in such a way that the medium (M) flows through at least part of the measurement channel (31),
An orifice plate (21) through which the medium (M) flows, wherein the orifice plate (21) is inserted into the pipe (20) in such a way that the medium (M) flows through both the orifice plate (21) and the measurement channel (31) in parallel,
wherein the orifice plate (21) has an orifice plate opening with a flow cross section (A_{Blende}), wherein the flow cross section (A_{Blende}) of the orifice plate opening is configured in such a way that a flow ratio from the medium (M) flowing through the flow cross section (A_{Messkanal}) of the measurement channel (31) to the medium (M) flowing through the flow cross section (A_{Blende}) of the orifice plate opening (A_{Blende}) is set to less than 1:20;
A differential pressure measuring assembly (40) for registering a pressure drop (| p2-p1 |) via the orifice plate (21) inserted into the pipe (20) and the measurement channel (31) of the MEMS sensor chip (30),
And an evaluation unit (50),
**characterized in that**
the evaluation unit (50) is configured to determine the volume flow and/or mass flow of the medium (M) independently of the medium using the pressure drop (| p2-p1 |) determined by the differential pressure measurement assembly and the density and/or viscosity determined by the MEMS sensor chip (30).

4. The apparatus as claimed in claim 3, wherein the flow cross section (A_{Blende}) of the orifice plate opening of the orifice plate (21) is configured in such a way that a flow ratio from the medium (M) flowing through the flow cross section (A_{Messkanal}) of the measurement channel (31) to the medium (M) flowing through the flow cross section (A_{Blende}) of the orifice plate opening (A_{Blende}) is set to less than 1:100, particularly preferably less than 1:500.

5. The apparatus as claimed in one of claims 3 or 4, wherein the measurement channel (31) of the MEMS sensor chip (30) has a flow cross section (A_{Messkanal}) with a diameter in the range from 0.03-1 mm, preferably 0.05-0.6 mm, particularly preferably 0.1-0.3 mm.

## Revendications

1. Procédé destiné à la détermination d'un débit volumique et/ou massique d'un produit (M) s'écoulant dans un tube (20), une densité et/ou une viscosité du fluide (F) étant déterminée(s) au moyen d'une puce de capteur MEMS (30), un canal de mesure (31) de la puce de capteur MEMS (30) étant traversé au moins partiellement par le produit (M) s'écoulant dans le tube (20) pour déterminer la densité et/ou la viscosité du fluide (F),
un diaphragme (21) étant introduit dans le tube (20) de telle sorte que le diaphragme et le canal de mesure de la puce de capteur MEMS sont traversés en parallèle et qu'une chute de pression (| p2-p1 |) est générée par le diaphragme (21) introduit dans le tube (20) et le canal de mesure (31) partiellement traversé de la puce de capteur MEMS (30),
le diaphragme (21) et le canal de mesure (31) étant adaptés l'un à l'autre de telle sorte qu'il s'établit un rapport d'écoulement inférieur à 1:20 entre le produit (M) s'écoulant à travers le canal de mesure (31) et le produit (M) s'écoulant à travers le diaphragme (21),
la chute de pression étant détectée,
**caractérisé en ce que**
le débit volumique et/ou massique du produit (M) est déterminé indépendamment du produit au moyen de la chute de pression (| p2-p1 |) détectée et de la densité et/ou de la viscosité déterminée par la puce de capteur MEMS (30).

2. Procédé selon la revendication 1, pour lequel le diaphragme (21) et le canal de mesure (31) sont adaptés l'un à l'autre de telle sorte qu'il s'établit un rapport d'écoulement inférieur à 1:100, de préférence inférieur à 1:500, entre le produit (M) s'écoulant à travers le canal de mesure (31) et le produit (M) s'écoulant à travers le diaphragme (21).

3. Dispositif destiné à la détermination d'un débit volumique et/ou massique (1) d'un produit (M) s'écoulant dans un tube (20), lequel dispositif comprend au moins :
une puce de capteur MEMS (30) avec un canal de mesure (31), lequel canal, pour déterminer une densité et/ou une viscosité du produit (M), est raccordé au tube (20) de telle sorte que le produit (M) traverse au moins partiellement le canal de mesure (31),
un diaphragme (21) à travers lequel s'écoule le produit (M), le diaphragme (21) étant introduit dans le tube (20) de telle sorte que le produit (M) traverse parallèlement aussi bien le diaphragme (21) que le canal de mesure (31),
le diaphragme (21) présentant une ouverture de diaphragme avec une section d'écoulement (A_{Blende}), la section d'écoulement (A_{Blende}) de l'ouverture de diaphragme étant conçue de telle sorte qu'il s'établit un rapport d'écoulement inférieur à 1:20 entre le produit (M) s'écoulant à travers la section d'écoulement (A_{Messkanal}) du canal de mesure (31) et le produit (M) s'écoulant à travers la section d'écoulement (A_{Blende}) de l'ouverture de diaphragme (A_{Blende}) ;
un dispositif de mesure de pression différentielle (40) destiné à détecter une chute de pression (| p2-p1 |) à travers le diaphragme (21) inséré dans le tube (20) et le canal de mesure (31) de la puce de capteur MEMS (30),
et une unité d'évaluation (50)
**caractérisé en ce que**
l'unité d'évaluation (50) est conçue pour déterminer, à l'aide de la chute de pression (| p2-p1 |) déterminée par le dispositif de mesure de pression différentielle et de la densité et/ou de la viscosité déterminée par la puce de capteur MEMS (30), le débit volumique et/ou massique du produit (M) indépendamment du produit.

4. Dispositif selon la revendication 3, pour lequel la section d'écoulement (A_{Blende}) de l'ouverture du diaphragme (21) est réalisée de telle sorte qu'il s'établit un rapport d'écoulement inférieur à 1:100, de préférence inférieur à 1:500, entre le produit (M) s'écoulant à travers la section d'écoulement (A_{Messkanal}) du canal de mesure (31) et le produit (M) s'écoulant à travers la section d'écoulement (A_{Blende}) de l'ouverture du diaphragme (A_{Blende}).

5. Dispositif selon l'une des revendications 3 ou 4, pour lequel le canal de mesure (31) de la puce de capteur MEMS (30) présente une section d'écoulement (A_{Messkanal}) avec un diamètre dans la plage de 0,03 à 1 mm, de préférence de 0,05 à 0,6 mm, de manière particulièrement préférée de 0,1 à 0,3 mm.
